Europäisches Patentamt

European Patent Office

Office européen des brevets

(19)

(11) Veröffentlichungsnummer : **0 057 396**
**B1**

(12) **EUROPÄISCHE PATENTSCHRIFT**

(45) Veröffentlichungstag der Patentschrift :
09.01.85

(21) Anmeldenummer : 82100473.6

(22) Anmeldetag : 23.01.82

(51) Int. Cl.⁴ : **C 09 D  7/12, C 08 K  5/00**

(54) **Verwendung einer Kombination von Antioxidantien und Komplexbildnern in ofentrocknenden Überzugsmitteln.**

(30) Priorität : 31.01.81 DE 3103270

(43) Veröffentlichungstag der Anmeldung :
11.08.82 Patentblatt 82/32

(45) Bekanntmachung des Hinweises auf die Patenterteilung : 09.01.85 Patentblatt 85/02

(84) Benannte Vertragsstaaten :
AT BE CH DE FR GB IT LI NL SE

(56) Entgegenhaltungen :
US-A- 3 907 745

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Wilk, Hans-Christoph, Dr.**
**An der Obererft 94**
**D-4040 Neuss (DE)**
Erfinder : **Wegemund, Bernd, Dr.**
**Händelweg 3**
**D-5657 Haan (DE)**

EP 0 057 396 B1

**Beschreibung**

Gegenstand der Erfindung ist eine Kombination von Antioxidantien beziehungsweise Polymerisationsinhibitoren und Komplexbildnern in ofentrocknenden Überzugsmitteln, insbesondere Klarlacken und weißpigmentierten Lacken, die aus zur Vergilbung neigenden Rohstoffen hergestellt werden.

Die Herstellung nicht gilbender Lacke ist möglich, wenn bei allen Komponenten vergilbende Bestandteile sorgfältig ausgeschlossen wurden. Solche beim Einbrennen vergilbenden Bestandteile können zum Beispiel Fettsäureschnitte mit einem Gehalt an mehrfach ungesättigten Bestandteilen sein.

Kritisch ist die Auswahl nichtflüchtiger Amine für wasserverdünnbare Lacke, da nur wenige dieser Komponenten vergilbungsstabil sind. So ist das Umsetzungsprodukt von Diethanolamin mit Glycidol, das ansonsten lacktechnisch recht günstig ist, besonders empfindlich gegen Vergilben.

Bekannt ist die Verwendung optischer Aufheller, um der Vergilbung entgegenzuwirken. Sie führt aber häufig zur Farbverfälschung. Außerdem können die Aufheller sich zudem bei höheren Einbrenntemperaturen zu gefärbten Verbindungen zersetzen. Die weiter bekannte Verwendung von Antioxidantien bewirkt nur graduelle Verbesserung. Bei größeren Mengen kann es zu Unverträglichkeiten wie Verlaufsstörung, Glanzminderung sowie anderweitiger Verfärbung kommen.

Aufgabe der Erfindung war es, in relativ kleinen Mengen wirkende, lackverträgliche Zusätze gegen die Vergilbung von ofentrocknenden Überzugsmitteln zu finden. Insbesondere sollten die Zusätze es erlauben, auch in wasserverdünnbaren Einbrennlacken auf Basis von Alkydharzen aus vergilbungsgefährdeten Rohstoffen zu wirken.

Diese Aufgabe wird erfindungsgemäß gelöst durch die Verwendung einer Kombination aus

a) Antioxidantien in einer Menge von 10 bis 500 ppm und

b) Komplexbildnern in einer Menge von 5 bis 250 ppm,

jeweils bezogen auf den Feststoffgehalt an Lackbindemittel.

Ein bevorzugter Bereich sowohl für die Antioxidation oder Radikalfänger als auch für die Komplexbildner liegt bei 50 bis 300 ppm für die Gesamtmenge der Wirkstoffkombination.

Als Antioxidationsmittel oder Radikalfänger ist insbesondere das Phenothiazin besonders wirksam. Außer dem Phenothiazin sind brauchbar das 2,2-Methylenbis-(4-methyl-6-tert.-butylphenol) oder das tert.-Butylbrenzcatechin oder auch Hydrochinon.

Bei den Komplexbildnern ist insbesondere Diethylendiamintetraessigsäure beziehungsweise ihre wasserlöslichen Salze besonders hervorzuheben. Gute Wirkungen zeigen auch Nitrilotriessigsäure und Diethylentriamin-pentaessigsäure, die auch in Form ihrer Salze verwendet werden können. Brauchbar sind schließlich die komplexbildenden Phosphonsäuren wie etwa Diethan-1-hydroxy-1,1-diphosphonsäure oder Di-3-amino-1-hydroxypropan-1,1-diphosphonsäure und ähnliche. Selbstverständlich können auch diese in Form ihrer insbesondere wasserlöslichen Salze verwendet werden. Sonst auch als Komplexbildner bezeichnete Säuren wie die Zitronensäure oder Äpfelsäure oder die Polyhydroxyacrylsäure zeigen keine besondere Wirkung. Sie sind allenfalls mit den vorgenannten hochwirksamen Verbindungen einsetzbar.

Die erfindungsgemäße Kombination kann verwendet werden in ofentrocknenden Lacksystemen, insbesondere weißpigmentierten Systemen und Klarlacken. Als Basis für derartige ofentrocknende Lacke können wasserverdünnbare Alkydharze oder Polyacrylatharze eingesetzt werden. Diese sollen außer dem eigentlichen Harz noch die üblichen Hilfsstoffe enthalten. Derartige Hilfsstoffe können sein : Emulgatoren beziehungsweise Lösungsvermittler, die insbesondere beim Einbrennen in das Lacksystem eingehen und dann unwirksam werden. Zum Einbrennen wird bei den wasserverdünnbaren Alkydharzen auch noch in der Regel gewisse Mengen an Vernetzern zugegeben. Hier hat sich der Hexamethylether des Hexamethylolmelamins bewährt.

Die Wirksamkeit der Kombination kann gemessen werden durch die Remissionswerte, die den Prozentanteil des diffus reflektierten Lichtes wiedergegeben. Bei einer Vergilbung wird ein Teil des eingestrahlten Lichtes absorbiert und dies bedeutet, daß die Remissionswerte kleiner werden.

Die Kombination der Vergilbungsinhibitoren können den Lacksystemen bei der Zubereitung selbst oder vorher den einzelnen Bestandteilen zugegeben werden. Im Falle der Herstellung von wasserverdünnbaren Lacken empfiehlt sich beispielsweise die Zugabe des wasserlöslichen Komplexbildners bei der Herstellung des Lackes selbst, daß Phenothiazin oder die anderen Radikalfänger oder Antioxidationsmittel können bereits vorher im Alkydharz oder im Polyacrylatharz gelöst sein.

Die erfindungsgemäßen Kombinationen schützen die Lacke während des Ofentrocknens und später gegenüber Lichteinflüssen.

Beispiele

J. Herstellung der Alkydharze

Die Kondensation erfolgte in einem heizbaren Glasrundkolben, der mit Rührer und Wasserabscheider versehen war, in üblicher Weise unter Stickstoff. Die Komponenten für die erste Stufe wurden gemeinsam beziehungsweise schrittweise unter Zusatz von 80 ml Xylol bis zur gewünschten Säurezahl erhitzt.

**0 057 396**

Nachstehend folgen Einzelheiten zur Herstellung der für Überzüge geeigneten Alkydharze in einer 3-Stufenkondensation :

a) 257,4 g Fettsäuren (1 % Myristinsäure, 11 % Palmitinsäure, 5 % Stearinsäure, 23 % Ölsäure, 58 % Linolsäure, 1 % Linolensäure, 1 % Arachinsäure)
     84,6 g Glycerin
   254,7 g Neopentylglycol
   226,8 g Phthalsäureanhydrid
   176,4 g Trimellitsäureanhydrid
Reaktionszeit : 1,5 Stunden
Reaktionstemperatur : maximal 190 °C
Säurezahl : 95,5.

b) Anschließend wurden 994,4 g des Kondensats der vorstehenden Stufe mit 73,2 g Glycerin bis zur Säurezahl 57,8 umgesetzt.
Reaktionszeit :                                   30 Min.
Temperatur :                           maximal 180 °C.

c) Schließlich wurde an das Kondensat mit der Säurezahl 57,8 in einer dritten Reaktionsstufe Glycid addiert.
   993,0 g Alkydharz (Säurezahl 57,8)
    30,0 g Glycerylamin (Addukt aus 1 Mol Diethanolamin und 1 Mol Glycid) als Katalysator
    48,3 g Glycid
Reaktionszeit : 10 Minuten
Reaktionstemperatur : 120 °C
Säurezahl : 22,5

## II. Herstellung von Überzügen

Das Alkydharz wurde in der Wärme mit 5,3 g des Adduktes von 7,5 Mol Glycid an 1 Mol Nonylphenol als Hilfsemulgator und 7,4 g des Adduktes von aus 1 Mol Glycid an 1 Mol Diethanolamin (bezogen auf 100 Harz) vermischt, wobei die Vergilbungsinhibitoren zugegeben wurden. Anschließend wurde mit Wasser auf 45 % Aktivsubstanzgehalt verdünnt. Zum Einbrennen wurde der Lack mit dem Hexamethylether des Hexamethylolmelamins (HMMM) als Vernetzer im Gewichtsverhältnis Alkydharz : Melaminharz wie 5 : 1 versetzt.

## III. Prüfung der Überzüge

Zur Prüfung der Filme wurden die Überzugsmittel auf Glasplatten aufgestrichen und eingebrannt. Die Trockenfilmdicke betrug 50 μm. Alle Filme waren klar, glänzend, ohne Verlaufstörungen und ausreichend hart.

Die Wirkung der Vergilbungsinhibitoren wurde durch Messung der Remissionswerte auf weißem Untergrund bei einer Wellenlänge von 430 nm bestimmt.

Die Remissionswerte geben den Prozentanteil des diffus reflektierten Lichtes wieder. Bei Vergilbung wird ein Teil absorbiert, und es bedeutet ein kleiner Remissionswert eine starke Vergilbung.

Standardtestplatte, weiß                                   95,8
Papier                       95,2
Glasplatte/Papier        83,5.

In der nachfolgenden Tabelle 1 sind die gefundenen Werte der Remission in % der eingebrannten Filme (150 °C/20 min) wiedergegeben. Es folgen die Menge und Art des Komplexbildners sowie des Antioxidationsmittels.

### Tabelle 1

| Remissions-wert % | Komplexbildner in ppm | | Antioxidationsmittel in ppm | |
|---|---|---|---|---|
| 80,5 | 50 | Ethylendiamin-tetraessigsäure | 200 | Phenothiazin |
| 81,0 | 50 | | 50 | |
| 80,5 | 100 | | 100 | |
| 80,0 | 50 | Ethylendiamin-tetraessigsäure | 200 | 2,2′-Methylenbis-(4-methyl-6-tert.-butylphenol) |
| 79,5 | 50 | | 200 | Hydrochinon |
| 81,0 | 50 | | 200 | 2,4-Ditert.-butyl-brenzcatechin |

3

In der nachstehenden Tabelle 2 sind in Abhängigkeit von der Remission Werte von Filmen wiedergegeben, die bei 180 °C während 20 Minuten eingebrannt waren.

Tabelle 2

| Remission in % | Komplexbildner in ppm | | Antioxidationsmittel in ppm | |
|---|---|---|---|---|
| 70,5 | 100 | | 100 | Phenothiazin |
| 68,2 | 100 | Ethylendiamin-tetraessigsäure | 100 | 2,2'-Methylen-bis-(4-methyl-6-tert.-butyl-phenol) |
| 66,2 | 100 | | 200 | 2,4-Ditert.-butylbrenzcatechin |

Vergleichsversuch

Beim Einbrennen bei 180 °C während 20 Minuten betrug die Remission ohne Zusätze 35,8 %, mit 100 ppm Ethylendiamintetraessigsäure 61,5 % und mit 100 ppm Phenothiazin 51,8 %.

**Ansprüche**

1. Verwendung einer Kombination aus
   a) Antioxidantien ausgewählt aus der Gruppe Phenothiazin, 2,2-Methylen-bis(4-methyl-6-tert.-butyl-phenol), tert.-Butyl-brenzcatechin sowie Hydrochinon in einer Menge von 10 bis 500 ppm und
   b) Komplexbildnern, ausgewählt aus der Gruppe Diethylendiamintetraessigsäure, Nitrilotriessigsäure, Diethylentriaminpentaessigsäure, komplexbildende Phosphonsäuren in einer Menge von 5 bis 250 ppm, jeweils bezogen auf den Feststoffgehalt an Lackbindemitteln,
   als Stabilisator gegen Verfärbungen in ofentrocknenden Überzugsmitteln.
2. Verwendung der Kombination nach Anspruch 1 in einer Menge von 50 bis 300 ppm als Gesamtwirkstoffmenge gegenüber Verfärbungen.

**Claims**

1. The use of a combination of
   a) antioxidants selected from the group comprising phenothiazine, 2,2-methylene-bis-(4-methyl-6-tert.-butylphenol), tert.-butyl pyrocatechol and hydroquinone in a quantity of from 10 to 500 ppm and
   b) complexing agents selected from the group comprising diethylene diamine tetra-acetic acid, nitrilotriacetic acid, diethylene triamine penta-acetic acid, complexing phosphonic acids in a quantity of from 5 to 250 ppm, based in each case on the solids content of lacquer binders,
   as a stabilizer against discoloration in oven-drying coating compositions.
2. The use of the combination claimed in Claim 1 in a quantity of from 50 to 300 ppm as the total quantity of active substance against discoloration.

**Revendications**

1. Utilisation d'une combinaison
   a) d'antioxydants choisis parmi le groupe comprenant la phénothiazine, le 2,2-méthylène-bis-(4-méthyl-6-tert-butylphénol), le tert-butylpyrocatéchol, ainsi que l'hydroquinone en une quantité de 10 à 500 parties par million, et
   b) d'agents complexants choisis parmi le groupe comprenant l'acide diéthylène-diamine-tétracétique, l'acide nitrilotriacétique, l'acide diéthylène-triaminopentacétique et les acides phosphoniques complexants en une quantité de 5 à 250 parties par million, calculé chaque fois sur la teneur en matières solides d'agents liants pour vernis,
   comme stabilisant contre les décolorations dans les agents de revêtement séchant au four.
2. Utilisation de la combinaison suivant la revendication 1 en une quantité de 50 à 300 parties par million comme quantité de substance active totale contre les décolorations.